# EUROPÄISCHE PATENTSCHRIFT

(11) **EP 1 282 784 B1**
(45) Veröffentlichungstag und Bekanntmachung des Hinweises auf die Patenterteilung: **22.03.2006**
(21) Anmeldenummer: 01945002.2
(22) Anmeldetag: 12.04.2001
(51) Int. Cl.: F16D 23/06

(54) **SYNCHRONKÖRPER EINER SYNCHRONISIEREINRICHTUNG**
SYNCHRONISATION BODY OF A SYNCHRONISATION DEVICE
CORPS DE SYNCHRONISATION D'UNE UNITE DE SYNCHRONISATION

(30) Priorität: 18.05.2000 DE 10024528
(43) Veröffentlichungstag der Anmeldung: 12.02.2003
(73) Patentinhaber: INA- Schaeffler KG, 91074 Herzogenaurach (DE)
(72) Erfinder: BUER, Gerald, 96172 Mühlhausen (DE); RÖCKELEIN, Ernst, 96138 Burgebrach (DE); SOYKA, Wilfried, 91074 Herzogenaurach (DE)
(86) Internationale Anmeldenummer: PCT/EP2001/004253
(87) Internationale Veröffentlichungsnummer: WO 2001/088401

(56) Entgegenhaltungen:
- DE-A- 19 821 565
- DE-A- 19 832 729
- US-A- 5 887 688

## Beschreibung

### Gebiet der Erfindung

Die Erfindung betrifft einen Synchronkörper einer Synchronisiereinrichtung in Schaltgetrieben, mit einem Steg und einer Muffenführung, wobei die die Muffenführung auf dem Steg verdrehfest angeordnet ist, der Synchronkörper mindestens eine sich radial von außen in den Steg erstreckende Aufnahme aufweist und die Aufnahme zumindest unverlierbar ein längs zur Längsmittelachse des Synchronkörpers geführtes und längsverschiebbares Druckstück, ein radial aus der Aufnahme vorstehendes Rastelement und wenigstens ein Federelement aufnimmt.

### Hintergrund der Erfindung

Ein derartiger Synchronkörper ist in DE 198 32 729 A1 beschrieben. Der Synchronkörper ist aus zwei Abschnitten gebildet. Diese Abschnitte sind als Einzelteile vorzugsweise durch einen spanlosen Formgebungsprozess gefertigt und weisen jeweils eine Hälfte der Muffenführung, des Steges und einer Nabe auf. Stimseitig zwischen den Abschnitten ist die Aufnahme ausgebildet. Dabei ist die Aufnahme sacklochförmig ausgebildet, wobei die Öffnung durch die Muffenführung radial nach außen weist. In dieser Aufnahme sitzt eine aus einem Druckstück, einem Rastelement und einer Feder gebildete Baueinheit. Die Baueinheit ist in der Aufnahme längsbeweglich geführt und unverlierbar aufgenommen. Das Rastelement ragt zumindest teilweise aus der Öffnung der Aufnahme heraus, um mit einer auf der Muffenführung längsverschiebbar angeordneten Schiebemuffe zusammenzuwirken. Die Baueinheit ist mittels in entgegengesetzte Längsrichtung weisender Drucklaschen in der Aufnahme unverlierbar gesichert. Die Drucklaschen greifen dazu in Aussparungen. Die Aussparung sind einander gegenüberliegend jeweils in einem der Abschnitte eingebracht. Die Drucklaschen greifen durch die Aussparungen hindurch. Die stirnseitig aus dem Steg des Synchronkörpers hervorstehenden Enden der Drucklaschen sind für ein Zusammenwirken mit einem Element der Synchronisiereinrichtung, wie z. B. einem Synchronring, vorgesehen.

Die in DE 198 32 729 A1 beschriebene Gattung von Synchronkörpem einer Synchronisiereinrichtung ist kostengünstig herzustellen. Sie zeichnen sich insbesondere durch ihr geringes Gewicht, einen geringen Materialeinsatz für ihre Fertigung und den relativ geringen Aufwand für ihre Montage aus. Der vorher beschriebene Synchronkörper der gattungsbildenden Art ist einfach zu montieren. Vor dem Zusammenfügen der beiden Abschnitte wird dabei die Baueinheit montiert. Es werden die Feder und das Rastelement in dem hülsenförmig ausgebildeten Druckstück aufgenommen und gegen Verlieren gesichert. Im Anschluss wird die somit entstandene Baueinheit mit einem ihrer Druckenden in die Aussparungen eines der Abschnitte eingelegt. Anschließend wird der andere Abschnitt stirnseitig an dem zuerst genannten Abschnitt ausgerichtet. Dabei greift das zweite Druckende in die Aussparung des zuletzt genannten Abschnittes. Schließlich werden die Abschnitte aneinandergefügt und der Synchronkörper ist fertig montiert. Selbstverständlich weisen die beschriebenen Synchronkörper nicht nur eine dieser Baueinheiten auf sondern sind mit mehreren, zumeist drei oder vier, am Umfang des Synchronkörpers verteilt angeordneten sowie in Aufnahmen aufgenommenen Baueinheiten bzw. Druckstücken versehen.

Zu dem Zeitpunkt, an dem die nachfolgend beschriebene Erfindung gemacht wurde, bestand die Aufgabe Wege zu finden, den Synchronkörper noch kostengünstiger zu gestalten. Der beschriebene Synchronkörper der gattungsbildenden Art weist an sich zufriedenstellende Eigenschaften auf. Also wurde nach Wegen gesucht, die Montagekosten zu reduzieren. Die Montagekosten sind bezogen auf die Gesamtkosten eines Synchronkörpers relativ hoch. Fände man einen Weg die Montage-kosten zu reduzieren, so ließe sich der gesamte Synchronkörper kostengünstiger gestalten.

### Zusammenfassung der Erfindung

Die Aufgabe der Erfindung ist es daher, einen Synchronkörper einer Sychronisiereinheit für Schaltgetriebe zu schaffen, der sich insbesondere in der Massenproduktion nach kostengünstiger montieren lässt.

Diese Aufgabe wird durch den kennzeichnenden Teil des Anspruchs 1 dadurch gelöst, dass
- die Aufnahme sich durch eine die Muffenführung zumindest radial durchbrechende und längs zur Längsmittelachse des Synchronkörpers verlaufende Ausnehmung hindurch bis in den Steg erstreckt,
- die Aufnahme zumindest an einer Stirnseite des Steges offen ist so dass wenigstens das Druckstück während seiner Montage in den Synchronkörper von der Stirnseite aus in die Aufnahme einsetzbar ist,
- das Rastelement in der Ausnehmung längsbeweglich geführt ist und radial nach innen in das Druckstück radialbeweglich zumindest teilweise eintaucht,
- dass das Rastelement an der Muffenführung mittels des Federelementes vorgespannt anliegt.

Die Aufnahme ist also in der Muffenführung und in dem Steg ausgebildet. Der Steg weist dazu eine längsausgerichtete, d. h. in Verschieberichtung einer Schiebemuffe verlaufende, Ausnehmung auf. Die Aufnahme setzt sich, ausgehend von der Ausnehmung, in der Muffenführung radial nach innen in dem Steg fort. In Längsrichtung, also an zumindest einer Stirnseite des Synchronkörpers, ist die Aufnahme offen. Diese Öffnung in der Aufnahme bzw. der Stirnseite des Steges ist so groß, dass zumindest das Druckstück während seiner Montage in den Synchronkörper durch diese Öffnung von dieser Stirnseite aus in die Aufnahme einsetzbar ist. Das Rastelement sitzt radial beweglich mit einem Ende in dem Druckstück. Das andere Ende des Rastelementes greift in die Ausnehmung ein und ist in der Ausnehmung längsbeweglich geführt. Auf das Rastelement wirkt ein Federelement und spannt das Rastelement gegen den Muffenkörper, z. B. gegen die Ränder der Ausnehmung, vor. Das Federelement stützt sich dabei an dem Steg des Synchronkörpers oder am Druckstück ab. Das Druckstück ist seitlich, d. h. in Umfangsrichtung, in der Aufnahme geführt, kann aber entlang der Längsachse des Synchronkörpers verschoben werden. Dabei sind Druckstücke mit beliebiger Gestaltung und mit den verschiedensten Fertigungsprozessen hergestellt einsetzbar. Das Federelement und das Druckstück können einzeln oder zu einer Baueinheit montiert vorliegen. Eine bevorzugte Ausgestaltung der Erfindung sieht ein Druckstück mit einer Führung für das Federelement vor. Das Federelement stützt sich in diesem Fall an dem Druckstück ab. Das Druckstück wird mittels der Federkraft des vorgespannten Federelementes zumeist radial nach innen gegen die Wandung mit der Aufnahme und damit gegen den Steg gedrückt oder ist unbeeinflusst von der Federkraft geführt. Die Vorspannwirkung der Feder mit dem in die Ausnehmung eingetauchten Rastelement bewirkt eine Sicherung des Rastelementes der Feder und dem Druckstück in der Aufnahme. Diese Elemente können unter normalen Umständen während der Handhabung eines fertig vormontierten Synchronkörpers nicht herausfallen.

Der Synchronkörper mit dem Druckstück und dem Rastelement kann als Einheit montiert werden, indem das Druckstück zusammen mit dem Rastelement und dem Federelement als Vormontageeinheit oder lose zusammengesteckt stirnseitig in die anfangs beschriebene Öffnung der Aufnahme eingeschoben bzw. eingeschnappt wird. Dabei verrastet das Rastelement unter der Federwirkung in der Ausnehmung und die Federkraft spannt das Druckstück gegen die Wandung des Steges. Bevorzugt wird jedoch das Rastelement allein oder zusammen mit der Feder von außen durch die Ausnehmung in das schon über die Stirnseite in dem Synchronkörper aufgenommene Druckstück eingesetzt. Das Rastelement ragt aus der Ausnehmung zumindest soweit hervor, dass eine auf der Muffenführung sitzende Schiebemuffe auf das Rastelement wirken kann. In der Regel bewegt sich die Schiebemuffe auf der Muffenführung aus einer Raststellung in Längsrichtung. In der Raststellung ist das Rastelement vorgespannt in der Schiebemuffe verrastet und hält die Schiebemuffe damit in einer Neutralposition. Wenn die Schiebemuffe bewegt wird, wirkt sie auf das Rastelement und verschiebt dieses in der Ausnehmung entlang der Längsmittelachse des Synchronkörpers. Da das Rastelement teilweise in das Druckstück eintaucht, wird also auch das Druckstück gleichzeitig in der Aufnahme in Längsrichtung verschoben und wirkt z. B. auf einen Synchronring.

Für die Synchronkörper gemäß Erfindung sind je nach Anwendungsfall verschiedene Ausführungen von Rastelementen, Federelementen und Druckstücken einsetzbar. Dabei kann das Druckstück massiv aus spanabhebender Fertigung oder als Pressteil mit einer Aufnahme für das Federelement und das Rastelement ausgelegt sein, das Federelement aus einer oder mehreren Stahlfedern verschiedenster Ausbildungsformen bestehen und das Rastelement z. B. in Form eines Bolzens vorliegen. In einer bevorzugten Ausführungsform ist jedoch vorgesehen, dass das Rastelement eine Kugel sowie das Federelement eine Schraubenfeder ist, und dass das Druckstück hülsenförmig aus Blech geformt ist sowie mit längs zur Längsmittelachse des Synchronkörpers weisenden Drucklaschen versehen ist. Damit ist eine besonders kostengünstige Variante eines erfin-dungsgemäßen Synchronkörpers geschaffen. Kugeln und Schraubenfedern der verschiedensten Abmessungen sind Standardteile. Ein aus Blech gezogenes bzw. geformtes Druckstück ist, insbesondere in der Massenfertigung, material- und zeitsparend herzustellen. Die längs zur Längsmittelachse des Synchronkörpers weisenden Drucklaschen sind entweder separat gefertigt und an dem hülsenförmigen Druckstück befestigt oder einstückig an dem Ziehteil ausgebildet.

In einer weiteren Ausgestaltung ist vorgesehen, dass die Ausnehmung als ein Langloch ausgebildet ist. Der Weg des Rastelementes ist somit in Längsrichtung begrenzt. Es ist aber auch denkbar, dass die Ausnehmung die Muffenführung in Umfangsrichtung gesehen durchgehend unterbricht, also stirnseitig nicht begrenzt ist.

Weiterhin ist eine Ausgestaltung an einem Synchronkörper vorgesehen, bei dem das Rastelement eine Kugel, das Federelement wenigstens eine Schraubenfeder und das Druckstück hülsenförmig ausgebildet ist. Bei diesem Synchronkörper liegt die Kugel federbelastet zumindest an längs ausgerichteten und parallel einander gegenüberliegenden Rändern der Ausnehmung an, wobei der größte freie Abstand zwischen den einander gegenüberliegenden Rändern zumindest um ein Einfederungsmaß kleiner ist, als der größte Durchmesser der Kugel. Das Einfederungsmaß entspricht der Summe des Betrages, um den der Durchmesser der Kugel elastisch einfedert sowie die Ausnehmung an den Rändern elastisch auffedert, wenn die Kugel während ihrer Montage von außen durch die Ausnehmung in die Aufnahme eingeschnappt wird. Darauf aufbauend sieht eine Ausgestaltung vor, dass der größte freie Abstand zwischen den einander gegenüberliegenden Rändern zumindest um eine Einfederungsmaß von maximal 0,2 mm kleiner ist als der größte Durchmesser der Kugel.

Ein Synchronkörper mit den Merkmalen der vorgenannten Erfindung und ihren Ausgestaltungen ist zeitsparend montierbar, da das Druckstück mit dem Rastelement erst nach der Fertigstellung des Trägerkörpers mit Nabe, Steg und Muffenführung eingelegt werden kann. Ein weiterer Vorteil ergibt sich mit einem Synchronkörper der vorgenannten Eigenschaften aufweist und bei dem zumindest der Steg durch wenigstens zwei durch Umformen von Blech hergestellte Abschnitte gebildet ist. Die Abschnitte sind längs zur Längsmittelachse des Synchronkörpers einander gegenüberliegend angeordnet. Dadurch weist der Steg einen Hohlraum auf, wobei der Hohlraum zumindest stirnseitig durch die Abschnitte begrenzt ist. Bei einem derartigen Synchronkörper liegen die aus Blech hergestellten Abschnitte entweder stirnseitig mit ihren Wandungen direkt aneinander oder sind in Längsrichtung beabstandet zueinander angeordnet. Die Wandungen können relativ dünn gewählt werden. Damit wird wenig Material für die Herstellung eines derartigen Synchronkörpers verwendet. Ein Synchronkörper dieser Ausführung weist ein hohes Widerstandsmoment gegen Biegung und Torsion auf und ist sehr leicht und kostengünstig herzustellen.

### Kurze Beschreibung der Zeichnungen

Die Erfindung wird nachfolgend anhand von einem Ausführungsbeispiel erläutert. Es zeigen:
- Figur 1: ein Ausführungsbeispiel eines Synchronkörpers gemäß Erfindung in der Hauptansicht,
- Figur 2: einen Schnitt durch den Synchronkörper nach Figur 1 entlang der Linie II-II und
- Figur 3: einen Abschnitt des Synchronkörper nach Figur 1 in der Draufsicht.

### Detaillierte Beschreibung der Zeichnungen

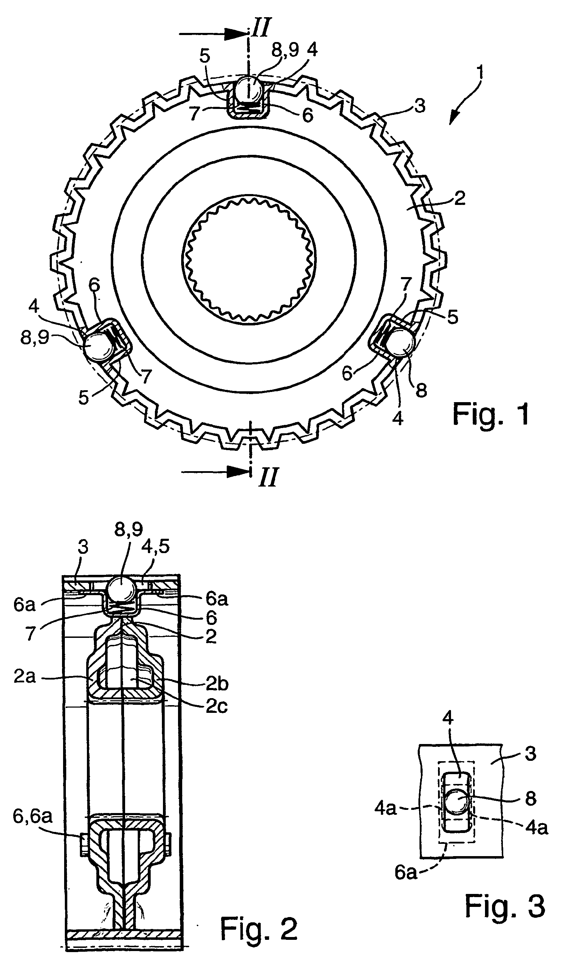

In Figur 1 bis 3 ist ein Synchronkörper 1 einer Synchronisiereinrichtung bezeichnet. Der Steg 2 des Synchronkörpers 1 ist aus zwei durch Umformen von Blech hergestellten Abschnitten 2a und 2b gebildet. Die Abschnitte 2a, 2b sind längs zur Längsmittelachse des Synchronkörpers einander gegenüberliegend angeordnet. Der Steg weist einen Hohlraum 2c auf, der stirnseitig in die eine Richtung durch den Abschnitt 2a und in die andere Richtung durch den Abschnitt 2b begrenzt ist. Eine Muffenführung 3 ist auf dem Steg befestigt. Die Muffenführung 3 weist an ihrem Umfang gleichmäßig verteilt drei Ausnehmungen 4 auf, durch die sich jeweils eine Aufnahme 5 von außen bis in den Steg 2 erstreckt. Die Aufnahme 5 ist in dem Steg 2 durch stirnseitig durchgehende Aussparungen gebildet und daher in beide Längsrichtungen an den Stirnseiten des Synchronkörpers 1 offen.

In jeder Aufnahme 5 sitzt ein Druckstück 6. Das Druckstück 6 ist mit seitlich hervorstehenden und in Längsrichtung weisenden Drucklaschen 6a versehen. In dem Druckstück 6 ist als Federelement 7 eine Schraubenfeder aufgenommen. In jedes Druckstück 6 taucht jeweils ein durch eine Kugel 9 gebildetes Rastelement 8 ein. Der Synchronkörper 1 ist als Vormontageeinheit ausgebildet. Für die Montage des Synchronkörpers 1 zu einer Vormontageeinheit wird von der Stirnseite jeweils ein Druckstück 6 mit seinen in Längsrichtung zum Synchronkörper 1 ausgerichteten Laschen 6a in eine Aufnahme 5 eingeschoben. Das Federelement 7 sitzt entweder schon in dem Druckstück 6 oder wird im Anschluss an das Einschieben des Druckstückes 6 von außen durch die Ausnehmung 4 hindurch in das Druckstück 6 eingelegt. Im Anschluss daran wird die Kugel 9 ebenfalls von außen durch die Ausnehmung 4 in das Druckstück 6 montiert. Dafür muss die Kugel 9 mit einer gewissen Montagekraft in die Ausnehmung 4 gepresst werden, da der größte freie Abstand zwischen den einander gegenüberliegenden Rändern 4a der Ausnehmung 4 um das Einfederungsmaß kleiner ist als der Durchmesser der Kugel 9. Der freie Abstand und der Durchmesser der Kugel 9 sind so aufeinander abgestimmt, dass unter Wirkung der Montagekraft die Ränder 4a soweit auffedem bzw. der Durchmesser der Kugel 9 soweit einfedert oder beide Elemente auf- bzw. einfedern, bis die Kugel 9 durch die Ausnehmung 4 hindurch in das Druckstück 6 eintauchend in dem Synchronkörper 1 einschnappt. Während diesen Prozesses wird auch das Federelement 7 vorgespannt.

Das Federelement 7 drückt die Kugel 9 gegen die Ränder 4a der Ausnehmung 4 in der Muffenführung 3. In die andere Richtung stützt sich das Federelement 7 gegen den Boden des hülsenförmig ausgebildeten Druckstückes 6 ab. Das Druckstück 6 wird dadurch radial nach innen gegen den Steg 6 verspannt. Die Federkraft ist geringer als die anfangs erwähnte Montagekraft. Die Kugel 9 kann mittels des Federelementes 7 von innen nicht durch die Ausnehmung 4 hindurch gedrückt werden. Das Druckstück 6 mit dem Federelement 7 und dem Rastelement 8 ist somit in dem Synchronkörper 1 verliergesichert. Wie aus Figur 3 außerdem zu erkennen ist, ist die Ausnehmung 4 als ein Langloch ausgebildet. Die Stirnenden des Langloches bilden Anschläge, die die Längsbewegung des Rastelementes 8 und damit des Druckstückes 6 einschränken.

### Bezugszeichen

- 1: Synchronkörper
- 2: Steg
- 2a: Abschnitt
- 2b: Abschnitt
- 2c: Hohlraum
- 3: Muffenführung
- 4: Ausnehmung
- 4a: Rand
- 5: Aufnahme
- 6: Druckstück
- 6a: Drucklasche
- 7: Federelement
- 8: Rastelement
- 9: Kugel

## Patentansprüche

1. Synchronkörper (1) einer Synchronisiereinrichtung in Schaltgetrieben, mit einem Steg (2) und einer Muffenführung (3), wobei die Muffenführung auf dem Steg (2) verdrehfest angeordnet ist, der Synchronkörper (1) mindestens eine sich radial von außen in den Steg (2) erstreckende Aufnahme (5) aufweist und die Aufnahme (5) zumindest unverlierbar ein längs zur Längsmittelachse des Synchronkörpers (1) geführtes und längsverschiebbares Druckstück (6), ein radial aus der Aufnahme (5) vorstehendes Rastelement (8) und wenigstens ein Federelement (7) aufnimmt, **dadurch gekennzeichnet, dass**
- die Aufnahme (5) sich durch eine die Muffenführung (3) zumindest radial durchbrechende sowie längs zur Längsmittelachse des Synchronkörpers (1) verlaufende Ausnehmung (4) hindurch bis in den Steg (2) erstreckt,
- die Aufnahme (5) zumindest an einer Stirnseite des Steges (2) offen ist, so dass wenigstens das Druckstück (6) während seiner Montage in den Synchronkörper (1) von der Stirnseite aus in die Aufnahme (5) einsetzbar ist,
- das Rastelement (8) in der Ausnehmung (4) längsbeweglich geführt ist und radial nach innen in das Druckstück (6) radialbeweglich zumindest teilweise eintaucht und
- dass das Rastelement (8) an der Muffenführung (3) mittels des Federelementes vorgespannt anliegt.

2. Synchronkörper nach Anspruch 1, **dadurch gekennzeichnet, dass** die Ausnehmung (4) als ein Langloch ausgebildet ist.

3. Synchronkörper nach Anspruch 1, bei dem das Rastelement (8) eine Kugel (9), das Federelement (7) wenigstens eine Schraubenfeder und das Druckstück (6) hülsenförmig ausgebildet ist, **dadurch gekennzeichnet, dass** die Kugel (9) federbelasted zumindest an längsausgerichteten und parallel einander gegenüberliegenden Rändern (4a) der Ausnehmung (4) anliegt, wobei der größte freie Abstand zwischen den einander gegenüberliegenden Rändern (4a) zumindest um ein Einfederungsmaß kleiner ist als der größte Durchmesser der Kugel (9) und wobei das Einfederungsmaß der Summe des Betrages entspricht, um den der Durchmesser der Kugel (9) elastisch einfedert sowie die Ausnehmung (4) an den Rändern (4a) elastisch auffedert, wenn die Kugel (9) während ihrer Montage von außen durch die Ausnehmung (4) in die Aufnahme (5) eingeschnappt wird.

4. Synchronkörper nach Anspruch 3, **gekennzeichnet durch** ein Einfederungsmaß von maximal 0,2 mm.

5. Synchronkörper nach Anspruch 1, **dadurch gekennzeichnet, dass** zumindest der Steg (2) aus wenigstens zwei durch Umformen von Blech hergestellen Abschnitten (2a, 2b) gebildet ist und die Abschnitte (2a, 2b) längs zur Längsmittelachse des Synchronkörpers (1) einander gegenüberliegend angeordnet sind und das der Steg (2) einen Hohlraum (2c) aufweist, wobei der Hohlraum (2c) zumindest stirnseitig durch die Abschnitte (2a, 2b) begrenzt ist.

6. Synchronkörper nach Anspruch 1, **dadurch gekennzeichnet, dass** das Federelement in dem Druckstück (6) geführt ist und sich an dem Druckstück abstützt.

## Claims

1. Synchroniser body (1) of a synchronising device in manual transmissions, comprising a web (2) and a sleeve guide (3) that is arranged fixed in rotation on the web (2), the synchroniser body (1) comprising at least one reception (5) that extends radially from the outside into the web (2), and the reception (5) receiving, at least secured against loss, one pressure member (6) that is guided longitudinally of the central longitudinal axis of the synchroniser body (1) for longitudinal displacement, one detent element (8) that projects radially out of the reception (5) and at least one spring element (7), **characterised in that,**
- the reception (5) extends into the web (2) through a recess (4) that extends at least radially through the sleeve guide (3) and longitudinally of the central longitudinal axis of the synchroniser body (1),
- the reception (5) is open at least at one front end of the web (2), so that at least the pressure member (6) can be inserted from the front end into the reception (5) during its mounting in the synchroniser body (1).
- the detent element (8) is guided for longitudinal displacement in the recess (4) while plunging radially inwards, at least partially, into the pressure member (6) for radial displacement, and
- the detent element (8) is pre-stressed by the spring element against the sleeve guide (3).

2. Synchroniser body according to claim 1, **characterised in that** the recess (4) is configured as a slot.

3. Synchroniser body according to claim 1, wherein the detent element (8) is a ball (9), the spring element (7) is at least one coiled spring and the pressure member (6) is bush-shaped, **characterised in that** the ball (9) bears under spring load at least against longitudinally oriented parallel, opposing edges (4a) of the recess (4), the largest clear distance between the opposing edges (4a) is smaller than the largest diameter of the ball (9) at least by an elastic yielding dimension, which elastic yielding dimension corresponds to the sum of the amounts by which the diameter of the ball (9) yields elastically and the recess (4) springs open elastically at the edges (4a) when the ball (9) is snapped into the reception (5) through the recess (4) during its mounting from the outside.

4. Synchroniser body according to claim 3, **characterised by** a maximum elastic yielding dimension of 0.2 mm.

5. Synchroniser body according to claim 1, **characterised in that** at least the web (2) is made of at least two sections (2a, 2b) that are manufactured by shaping out of sheet metal, the sections (2a, 2b) are arranged opposite each other longitudinally of the central longitudinal axis of the synchroniser body (1) and the web (2) comprises a hollow space (2c) that is defined at least frontally by the sections (2a, 2b).

6. Synchroniser body according to claim 1, **characterised in that** the spring element is guided in the pressure member (6) while being supported on the pressure member (6).

## Revendications

1. Corps de synchronisation (1) d'un dispositif de synchronisation dans des boîtes de vitesses manuelles, comprenant une entretoise (2) et un guide (3) de manchon qui et immobilisé en rotation sur l'entretoise (2), le corps de synchronisation (1) comprenant au moins une réception (5) qui s'étend radialement de l'extérieur dans l'entretoise (2), et la réception (5) recevant, de manière imperdable, au moins un membre de la poussée (6) qui est guidé en déplacement longitudinal le long de l'axe longitudinal central du corps de synchronisation (1), un élément d'arrêt (8) qui fait radialement saillie à partir de la réception (5) et au moins en élément ressort (7), **caractérisé en ce que**
- la réception (5) s'étend jusque dans l'entretoise (2) en traversant un évidement (4) qui traverse, au moins radialement, le guide (3) de manchon en s'étendant le long de l'axe longitudinal central du corps de synchronisation (1),
- la réception (5) est ouverte au moins à l'un des côtés frontaux de l'entretoise (2), de sorte que, au moins le membre de la poussée (6) peut être inséré à partir de ce côté frontal dans la réception (5) pendant son montage dans le corps de synchronisation (1),
- l'élément d'arrêt (8) est guidé en déplacement longitudinal dans l'évidement (4) et plonge radialement vers l'intérieur, au moins partiellement, dans le membre de la poussée (6) en étant radialement déplaçable, et
- l'élément d'arrêt (8) est précontraint par l'élément ressort contre le guide (3) de manchon.

2. Corps de synchronisation selon la revendication 1, **caractérisé en ce que** l'évidement (4) est configuré sous la forme d'un trou oblong.

3. Corps de synchronisation selon la revendication 1, dans lequel l'élément d'arrêt (8) est une bille (9), l'élément ressort (7) est au moins un ressort à boudin et le membre de la poussée (6) est configurée en forme de douille, **caractérisé en ce que** la bille (9), mise sous charge par le ressort, s'appuie au moins contre des bords opposés (4a) de l'évidement (4) qui sont parallèles, l'un à l'autre, et orientés en direction longitudinale, la plus grande distance libre entre les bords opposés (4a) étant inférieure au plus grand diamètre de la bille (9) au moins d'une cote de fléchissement élastique, et **en ce que** cette cote de fléchissement élastique est égale à la somme de la cote de laquelle le diamètre de la bille (9) se fléchit élastiquement et la cote de laquelle l'évidement (4) s'élargit élastiquement aux bords (4a) lorsque la bille (9) l'encliquète pendant son montage dans la réception (5) en venant de l'extérieur à travers l'évidement (4).

4. Corps de synchronisation selon la revendication 3, **caractérisé par** une cote maximum de fléchissement élastique de 0,2 mm.

5. Corps de synchronisation selon la revendication 1, **caractérisé en ce que**, au moins l'entretoise (2) est constituée d'au moins deux sections (2a, 2b) fabriquées par formage en tôle, les sections (2a, 2b) sont agencées vis-à-vis, l'une de l'autre, le long de l'axe longitudinal central du corps de synchronisation (1) et **en ce que** l'entretoise (2) comprend une cavité (2c) qui est délimitée, au moins frontalement, par les sections (2a, 2b).

6. Corps de synchronisation selon la revendication 1, **caractérisé en ce que** l'élément ressort est guidé dans le membre de la poussée (6) en étant supporté sur le membre de la poussée.
